(19) Europäisches Patentamt
European Patent Office
Office européen des brevets

(11) **EP 4 063 214 B1**

(12) **EUROPEAN PATENT SPECIFICATION**

(45) Date of publication and mention
of the grant of the patent:
**18.12.2024   Bulletin 2024/51**

(21) Application number: **21830010.1**

(22) Date of filing: **22.06.2021**

(51) International Patent Classification (IPC):
**B60W 30/095** (2012.01)    **B60W 40/105** (2012.01)
**B60W 40/107** (2012.01)    **B60W 40/109** (2012.01)
**B60W 60/00** (2020.01)      **B60W 30/18** (2012.01)
**B60W 50/00** (2006.01)

(52) Cooperative Patent Classification (CPC):
**B60W 30/18163; B60W 30/095; B60W 50/0097;
B60W 60/0015;** B60W 2552/10; B60W 2552/53;
B60W 2554/4041; B60W 2554/4042;
B60W 2554/4043; B60W 2554/80

(86) International application number:
**PCT/CN2021/101525**

(87) International publication number:
**WO 2021/259257 (30.12.2021 Gazette 2021/52)**

(54) **METHOD AND DEVICE FOR COLLISION AVOIDANCE CONTROL IN AUTOMATIC LANE CHANGE, VEHICLE, AND STORAGE MEDIUM**

VERFAHREN UND VORRICHTUNG ZUR KOLLISIONSVERMEIDUNGSSTEUERUNG BEI EINEM AUTOMATISCHEN SPURWECHSEL, FAHRZEUG UND SPEICHERMEDIUM

PROCÉDÉ ET DISPOSITIF DE COMMANDE D'ÉVITEMENT DE COLLISION LORS D'UN CHANGEMENT DE VOIE AUTOMATIQUE, VÉHICULE, ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2020   CN 202010591875**

(43) Date of publication of application:
**28.09.2022   Bulletin 2022/39**

(73) Proprietor: **China Faw Co., Ltd.**
**Changchun, Jilin 130011 (CN)**

(72) Inventors:
• **TAO, Pei**
**Changchun, Jilin 130011 (CN)**
• **LIANG, Guiyou**
**Changchun, Jilin 130011 (CN)**
• **SUN, Lianming**
**Changchun, Jilin 130011 (CN)**
• **CUI, Maoyuan**
**Changchun, Jilin 130011 (CN)**

(74) Representative: **Berggren Oy**
**P.O. Box 16
Eteläinen Rautatiekatu 10A
00101 Helsinki (FI)**

(56) References cited:
**EP-A1- 3 239 960**        **WO-A1-2019/204053**
**CN-A- 108 313 054**     **CN-A- 110 239 550**
**CN-A- 110 614 994**     **CN-A- 110 614 994**
**CN-A- 111 717 199**     **US-A1- 2017 259 819**
**US-A1- 2019 016 339**

**Description**

**Cross-Reference to Related Application**

The present invention claims the priority of Chinese Patent Application No. 202010591875.9, filed to the Chinese Patent Office on June 24, 2020.

**Technical Field**

The present invention relate to the technical field of autonomous driving control, and in particular to a method and apparatus for collision avoidance control of automatic lane change, a vehicle, and a storage medium.

**Background**

The development of an autonomous driving function of a vehicle is in full swing. With the autonomous driving function, a driver can be liberated from driving with hands, feet and eyes looking ahead. Once a navigation destination is set, the driver even does not have to take charge of the vehicle. An autonomous vehicle has multiple autonomous decision-making and control tasks, including autonomous control of centering, autonomous control of lane changing, autonomous navigation path planning, etc. It is necessary to take essential measures for various abnormal working conditions during autonomous driving to minimize risks, so as to ensure safety of autonomous driving.

For active and safe collision prevention in automatic vehicle lane change, firstly whether a vehicle can change a lane is determined by detecting whether there is a target affecting lane change in an adjacent lane. For example, with a collision avoidance threshold of lane change danger set, in response to a distance between the target in the adjacent lane and the present vehicle being detected to be less than the threshold, the vehicle stops changing the lane and continues traveling in an original lane.

US 2019/016339 A1, EP 3239960 A1 and CN 110614994 A describe methods for changing lanes while avoiding vehicles traveling on lanes adjacent to a host lane.

However, during automatic lane change, information such as an operating state of a driver and a state and a posture of a vehicle tends to affect lane change decision-making. Further, during lane change, in response to the present vehicle directly stopping changing the lane and returns to the original lane, it also possibly collides with another vehicle in the original lane, resulting in greater danger.

**Summary**

Aspects of the present invention provide a method and apparatus for collision avoidance control of automatic lane change, a vehicle and a storage medium, so as at least to realize collision avoidance control of a vehicle when the vehicle encounters a lane change abnormality during lane change, decrease a possibility of a collision when the vehicle encounters an automatic lane change abnormality, reduce severity of a collision when a collision is inevitable, and improve driving safety of the vehicle.

An aspect of the present invention provides a method for collision avoidance control of automatic lane change. The method includes: acquiring driving parameters of a current vehicle, driving parameters of at least one target vehicle, and road information in response to the current vehicle executing a lane change operation; determining a travel collision safety detection time period, a return collision safety detection time period, and lane change virtual action lines according to the driving parameters of the current vehicle, the driving parameters of the at least one target vehicle, and the road information; and determining, in response to a lane change abnormality being detected, a collision avoidance strategy according to a positional relation between the current vehicle and the lane change virtual action lines, the travel collision safety detection time period, and the return collision safety detection time period to control the current vehicle to execute the collision avoidance strategy, and the at least one target vehicle includes at least one vehicle before and behind the current vehicle in an original lane and at least one vehicle before and behind the current vehicle in a target lane.

Another aspect of the present invention further provides an apparatus for collision avoidance control of automatic lane change. The apparatus for collision avoidance control of automatic lane change includes: an information acquisition module configured to acquire driving parameters of a current vehicle, driving parameters of at least one target vehicle, and road information in response to the current vehicle executing a lane change operation; an information determination module configured to determine a travel collision safety detection time period, a return collision safety detection time period, and lane change virtual action lines according to the driving parameters of the current vehicle, the driving parameters of the at least one target vehicle, and the road information; and a collision avoidance strategy determination module configured to determine, in response to a lane change abnormality being detected, a collision avoidance strategy according to a positional relation between the current vehicle and the lane change virtual action lines, the travel collision safety detection time period, and the return collision safety detection time period to control the current vehicle to execute the collision avoidance strategy, and the at least one target vehicle includes at least one vehicle before and behind the current vehicle in an original lane and at least one vehicle before and behind the current vehicle in a target lane.

Another aspect of the present invention further provides a vehicle. The vehicle includes:

at least one controller; and a storage apparatus configured to store at least one program, and at least one controller implement the method for collision avoidance control of automatic lane change provided in any one of the embodiments of the present invention in response to executing at least one program.

Another aspect of the present invention further provides a storage medium including at least one computer executable instruction, where the computer executable instruction is configured to execute the method for collision avoidance control of automatic lane change provided in any one of the embodiments of the present invention in response to being executed by a computer processor.

## Brief Description of the Drawings

Fig. 1 is a flowchart of a method for collision avoidance control of automatic lane change in Embodiment One of the present invention.
Fig. 2 is a flowchart of a method for collision avoidance control of automatic lane change in Embodiment Two of the present invention.
Fig. 3 is a diagram of an example of lane change virtual action lines in Embodiment Two of the present invention.
Fig. 4 is a flowchart of a method for collision avoidance control of automatic lane change in Embodiment Three of the present invention.
Fig. 5 is a structural schematic diagram of an apparatus for collision avoidance control of automatic lane change in Embodiment Four of the present invention.
Fig. 6 is a structural schematic diagram of a vehicle in Embodiment Five of the present invention.

## Detailed Description

The present invention will be described below with reference to accompanying drawings and in conjunction with embodiments. It may be understood that embodiments described herein are used for explaining the present invention, but not limit the present invention, which is defined by the appended claims. Moreover, it should be noted that, for convenience of description, some rather than all of structures related to the present invention are shown in the accompanying drawings.

Embodiment One

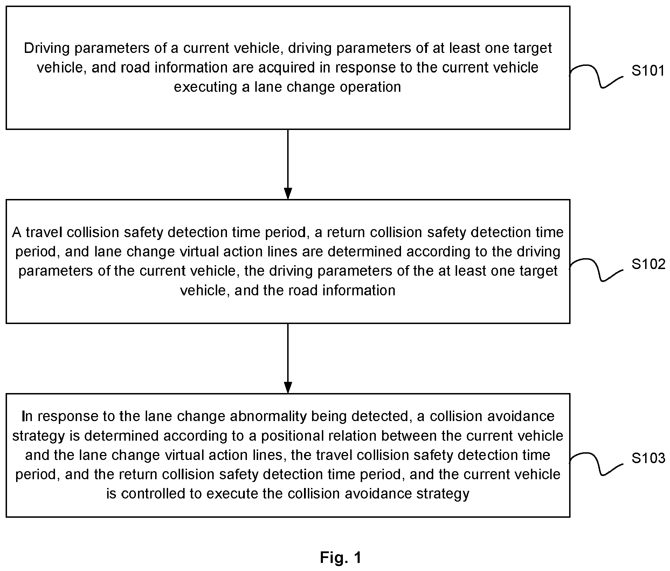

Fig. 1 is a flowchart of a method for collision avoidance control of automatic lane change provided in Embodiment One of the present invention. The embodiment is applicable to the situation of determining a collision avoidance strategy in response to a vehicle encountering a lane change abnormality during automatic lane change. The method may be executed by an apparatus for collision avoidance control of automatic lane change, the apparatus for collision avoidance control of automatic lane change may be implemented by software and/or hardware, and the apparatus for collision avoidance control of automatic lane change may be configured on a computing device. The method includes the following steps.

In step S101, driving parameters of a current vehicle, driving parameters of at least one target vehicle, and road information are acquired in response to the current vehicle executing a lane change operation.

The driving parameters of the current vehicle may be understood as feature values used for indicating a driving state of the current vehicle at a current moment. Optionally, the driving parameters of the current vehicle may include a longitudinal velocity of the current vehicle, a longitudinal acceleration of the current vehicle, a lateral velocity of the current vehicle, a lateral acceleration of the current vehicle, a position of the current vehicle, etc. The driving parameters of the current vehicle may be acquired by an electronic stability program (ESP) and multiple cameras and radars which are mounted on a vehicle body.

At least one target vehicle may be understood as at least one vehicle that may pose a collision threat to the current vehicle during automatic lane change. Optionally, the at least one target vehicle may include at least one vehicle before and behind the current vehicle in an original lane in response to the current vehicle not changing a lane and at least one vehicle before and behind the current vehicle in a target lane that the current vehicle is expected to after lane change. The driving parameters of the at least one target vehicle may be understood as feature values used for indicating a driving state of the at least one target vehicle at a current moment. Optionally, the driving parameters of the target vehicle may include a longitudinal velocity of the at least one target vehicle, a longitudinal acceleration of the at least one target vehicle, a lateral velocity of the at least one target vehicle, a lateral acceleration of the at least one target vehicle, a position of the at least one target vehicle, etc. The driving parameters of the at least one target vehicle may be acquired by multiple cameras and radars which are mounted on the vehicle body of the current vehicle.

The road information may be understood as road surface information of a lane where the current vehicle is located and the target lane that the current vehicle is expected to enter after lane change, which is acquired by the current vehicle. Optionally, the road information may include lane line information of the original lane and the target lane. The road information may be acquired by multiple cameras that are mounted on the vehicle body of the current vehicle.

The lateral and longitudinal velocities and the lateral and longitudinal accelerations of the current vehicle, in response to the current vehicle executing the lane change operation, are acquired by the ESP of the current vehicle. The position of the current vehicle is determined by multiple cameras and radars which are mounted on the vehicle body, and the acquired parameters are used as the driving parameters of the current vehicle. Moreover, lateral velocities, longitudinal velocities, lateral accelerations, longitudinal accelerations, and positions of target vehicles that are located before and behind the current vehicle in a lane where the current vehicle is located and before and behind the current vehicle in the target lane are acquired by multiple cameras and radars which are mounted on the vehicle body of the current vehicle. The acquired parameters are used as the driving parameters of the target vehicle. The lane line information of the lane where the current vehicle is located and the target lane that the current vehicle is expected to after lane change is acquired by multiple cameras that are mounted on the vehicle body of the current vehicle, and the information is used as the road information.

In step S102, a travel collision safety detection time period, a return collision safety detection time period, and lane change virtual action lines are determined according to the driving parameters of the current vehicle, the driving parameters of the at least one target vehicle, and the road information.

The travel collision safety detection time period may be understood as the shortest time period of a collision between the current vehicle and the at least one target vehicle in the target lane in response to the current vehicle executing the lane change operation with a current travel velocity unchanged. The return collision safety detection time period may be understood as the shortest time period of a collision between the current vehicle and at least one target vehicle in the original lane in response to the current vehicle returning from a current position to the original lane with the current travel velocity of the current vehicle unchanged. The lane change virtual action lines may be understood as virtual action lines on two sides of an overlapping lane line, which are determined according to a position of the overlapping lane line (namely a lane line shared by the target lane and the original lane) of the target lane and the original lane, and may be configured to assist in determining the current position of the current vehicle and danger of travel and return.

The collision safety detection time period of each target vehicle and the current vehicle is computed according to the longitudinal velocity and the longitudinal acceleration of the current vehicle, the longitudinal velocity and the longitudinal acceleration of this target vehicle, as well as a longitudinal relative distance between this target vehicle and the current vehicle. The minimum collision safety detection time period is determined from collision safety detection time periods corresponding to all target vehicles in the target lane, and the minimum collision safety detection time period is determined as the travel collision safety detection time period. The minimum collision safety detection time period is determined from collision safety detection time periods corresponding to all target vehicles in the original lane of the current vehicle, and the minimum collision safety detection time period is determined as the return collision safety detection time period. According to the position of the acquired overlapping lane line of the target lane and the original lane in the road information, the lane line shifts to an original lane side where a vehicle is located by a first preset distance so as to determine a virtual action line as a return allowing action line, the lane line shifts to a target lane side that the current vehicle is expected to after lane change by a second preset distance so as to determine a virtual action line as a return prohibiting action line, and the return allowing action line and the return prohibiting action line are used as the lane change virtual action lines.

In step S103, in response to the lane change abnormality being detected, a collision avoidance strategy is determined according to a positional relation between the current vehicle and the lane change virtual action lines, the travel collision safety detection time period, and the return collision safety detection time period, and the current vehicle is controlled to execute the collision avoidance strategy.

The lane change abnormality may be understood as a situation that the current vehicle cannot continue changing a lane according to a pre-computed lane change track. Optionally, the lane change abnormality may include a lane change stop actively triggered by a driver of the current vehicle, a lane change stop in response to the current vehicle detecting a collision risk during lane change, a lane change stop caused by some conditions of the current vehicle, etc.

The collision avoidance strategy may be understood as planning of a driving strategy to avoid a collision for the current vehicle during lane change, and may include the return strategy of returning to the original lane and the travel strategy of continuing changing a lane for driving.

In response to the current vehicle determining that a driver expects to stop changing a lane according to an operation received from the driver, or determining that there is a collision risk of lane change by means of detection devices such as the ESP, a camera and a radar, a relative positional relation between the current vehicle and the original lane as well as the target lane during lane-changing driving is determined, according to a relative positional relation between the current position of the current vehicle and the lane change virtual action lines. In response to the current vehicle continues changing a lane and returns to the original lane, collision risks under a current positional relation are determined, according to the travel collision safety detection time period and the return collision safety detection time period, to obtain a determination result. A driving strategy with a low collision risk is selected, according to the determination result, as a collision avoidance strategy, and the current vehicle is controlled to execute the collision avoidance strategy so as to travel in a manner with a low risk.

According to the technical solution of the embodiment, the driving parameters of the current vehicle, the driving parameters of the at least one target vehicle, and the road information are acquired in response to the current vehicle executing the lane change operation. The travel collision safety detection time period, the return collision safety detection time period, and the lane change virtual action lines are determined according to the driving parameters of the current vehicle, the driving parameters of the at least one target vehicle, and the road information. In response to the lane change abnormality being detected, the collision avoidance strategy is determined according to the positional relation between the current vehicle and the lane change virtual action lines, the travel collision safety detection time period, and the return collision safety detection time period to control the current vehicle to execute the collision avoidance strategy. The at least one target vehicle includes at least one vehicle before and behind the current vehicle in the original lane and at least one vehicle before and behind the current vehicle in the target lane. The travel collision safety detection time period, the return collision safety detection time period, and the lane change virtual action lines are determined according to the driving parameters of the current vehicle, the driving parameters of the at least one target vehicle, and the road information. In response to the current vehicle detecting the lane change abnormality, the collision risks for the current vehicle continuing changing a lane and returning to the original lane may be determined according to the position of the current vehicle in the lane at the current moment, the travel collision safety detection time period and the return collision safety detection time period to obtain a determination result. According to the determination result, a solution with a lowest risk is selected as the collision avoidance strategy, so that the current vehicle travels according to the collision avoidance strategy. The method solves a problem in the related art that it is difficult to determine the collision avoidance strategy with the lowest risk in response to a vehicle encountering the lane change abnormality during automatic lane change, decreases a possibility of collisions in response to the vehicle encountering an automatic lane change abnormality, avoids responsibility of the vehicle to the maximum extent in response to a collision being inevitable, reduces severity of a collision in response to collision being inevitable, and improves driving safety of the vehicle.

Embodiment Two

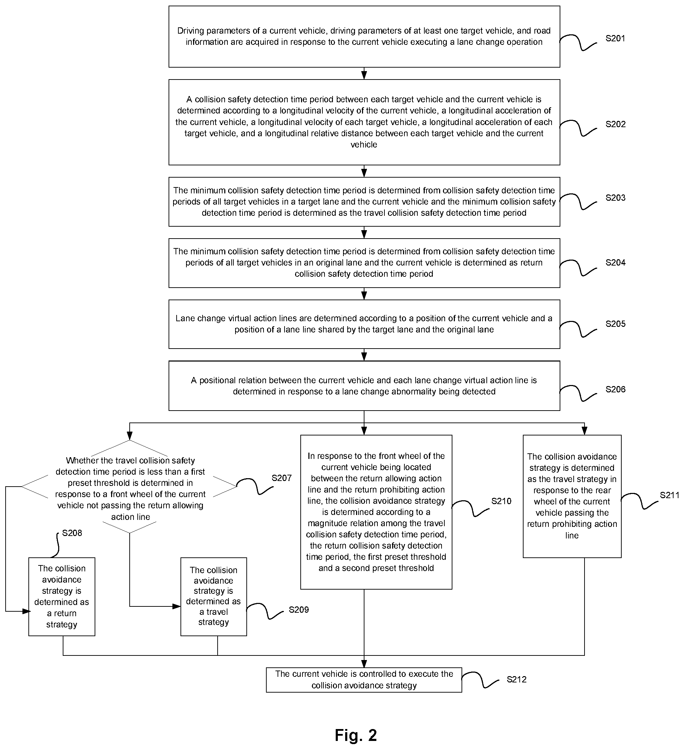

Fig. 2 is a flowchart of a method for control of automatic lane change provided in Embodiment Two of the present invention. The technical solution of the embodiment is described on the basis of the above technical solution, and the method includes the steps as follows.

In step S201, driving parameters of a current vehicle, driving parameters of at least one target vehicle, and road information are acquired in response to the current vehicle executing a lane change operation.

In step S202, a collision safety detection time period between each target vehicle and the current vehicle is determined according to a longitudinal velocity of the current vehicle, a longitudinal acceleration of the current vehicle, a longitudinal velocity of each target vehicle, a longitudinal acceleration of each target vehicle, and a longitudinal relative distance between each target vehicle and the current vehicle.

The longitudinal velocity of the current vehicle is indicated as $V_{SV}$, the longitudinal acceleration of the current vehicle is indicated as $a_{SV}$, the longitudinal velocity of the target vehicle is indicated as $V_{TV}$, the longitudinal acceleration of the target vehicle is indicated as $a_{TV}$, and the longitudinal relative distance is indicated as $X_C$, so the collision safety detection time period may be indicated as

$$ETTC_{longitudinal} = \frac{-(V_{TV} - V_{SV}) - \sqrt{(V_{TV} - V_{SV})^2 - 2 * (a_{TV} - a_{SV}) * X_c}}{(a_{TV} - a_{SV})}$$

In step S203, the minimum collision safety detection time period is determined from collision safety detection time periods of all target vehicles in a target lane and the current vehicle and the minimum collision safety detection time period is determined as the travel collision safety detection time period.

Collision safety detection time period corresponding to multiple target vehicles that possibly collide with the current vehicle in the target lane is acquired, the collision safety detection time periods indicate collision time periods of the current vehicle with the multiple target vehicles that possibly collide with the current vehicle in response to the current vehicle changing a lane at a current velocity, the minimum collision safety detection time period is selected from the

5

collision safety detection time periods and the minimum collision safety detection time period is determined as the travel collision safety detection time period, which indicates a collision risk that the current vehicle has in response to changing a lane and traveling to the target lane at a current moment.

In step S204, the minimum collision safety detection time period is determined from collision safety detection time periods of all target vehicles in an original lane and the current vehicle is determined as return collision safety detection time period.

Collision safety detection time periods corresponding to multiple target vehicles that possibly collide with the current vehicle in the original lane where the current vehicle is located in response to the current vehicle not changing a lane is acquired, the collision safety detection time periods indicate collision time periods of the current vehicle with the multiple target vehicles that possibly collide with the current vehicle in response to the current vehicle returning to the original lane at the current velocity, the minimum collision safety detection time period is selected from the acquired collision safety detection time periods, and the minimum collision safety detection time period is determined as the return collision safety detection time period, which indicates a collision risk that the current vehicle has in response to giving up changing a lane and returning to the original lane at the current moment.

In step S205, lane change virtual action lines are determined according to a position of the current vehicle and a position of a lane line shared by the target lane and the original lane.

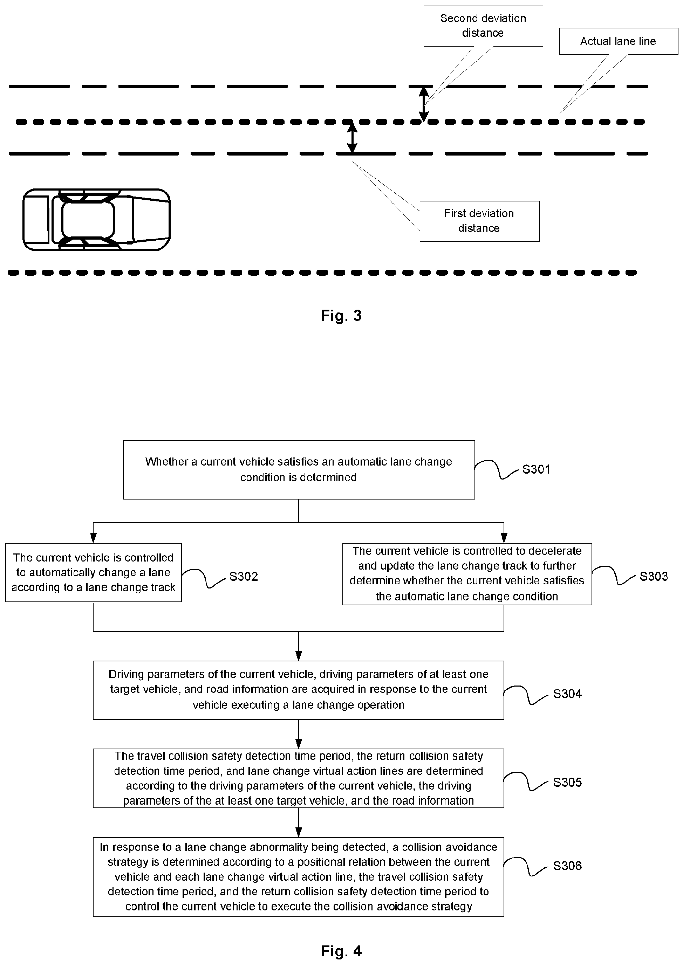

For example, Fig. 3 is a diagram of an example of a lane change virtual action lines provided in an embodiment of the present invention. A vehicle coordinate system is created by taking a vehicle center of the current vehicle as an origin, Y as a lateral distance, leftward as positive, X as a longitudinal distance and forward as positive. It may be seen from Fig. 3 that a distance between the vehicle center of the current vehicle and the lane line is $C_0$, the lane line shifts to an original lane side where the current vehicle is located by a first preset distance *offset1* so as to determine a virtual action line as a return allowing action line, and a distance $C_0'$ between the return allowing action line and the vehicle center of the current vehicle is indicated as:

$$C_0' = C_0 - offset1$$

The lane line shifts to a target lane side that the current vehicle is expected to after lane change by a second preset distance *offset2* so as to determine a virtual action line as a return prohibiting action line, and a distance $C_0''$ between the return prohibiting action line and the vehicle center of the current vehicle is indicated as:

$$C_0'' = C_0 + offset2$$

The return allowing action line and the return prohibiting action line are used as the lane change virtual action lines.

In step S206, a positional relation between the current vehicle and each lane change virtual action line is determined in response to a lane change abnormality being detected.

Optionally, the lane change abnormality may include a lane change stop actively triggered by a driver of the current vehicle, a lane change stop in response to the current vehicle detecting a collision risk during lane change, a lane change stop caused by conditions of the current vehicle, etc. Optionally, the lane change stop actively triggered by the driver may include: actively turning off a turn light by a driver, reversely turning a steering wheel by the driver, actively decelerating to a lane change critical velocity or below by the driver, actively accelerating to the lane change critical velocity or above by the driver, etc.. The lane change stop in response to the collision risk being detected may include: sudden rapid deceleration of vehicles before the target lane, sudden rapid acceleration of vehicles behind the target lane, sudden cutting of a vehicle on a third lane into the lane (which is the lane where the current lane is located), sudden rapid deceleration of vehicles before the lane, sudden rapid acceleration of vehicles behind the lane, etc.. The lane change stop caused by the conditions of the current vehicle may include: following a preceding vehicle and decelerating to a critical velocity or below by the current vehicle, following the preceding vehicle and accelerating to the critical velocity or above by the current vehicle, etc.

In response to the current vehicle detects any of the above situations, it is considered that a lane is changed abnormally. In this case, the positional relation between the current vehicle and each of the lane change virtual action lines is determined according to cameras mounted on a vehicle body, so as to determine a collision risk of travel and return of the current vehicle according to the positional relation. The positional relation between the current vehicle and each of the lane change virtual action lines may be divided into: 1) a front wheel of the current vehicle does not pass the return allowing action line, that is, lane change of the current vehicle is just started and the current vehicle is not deviated from the original lane; 2) the front wheel of the current vehicle is located between the return allowing action line and the return prohibiting action line, that is, the lane change of the current vehicle is executed for a certain time period, and the current vehicle is in a process of passing the lane line from the original lane to the target lane; and 3) a rear wheel of the current vehicle passes the return prohibiting action line, that is, the lane change of the current vehicle comes to an end, and a whole vehicle basically completely enters the target lane.

In step S207, whether the travel collision safety detection time period is less than a first preset threshold is determined in response to a front wheel of the current vehicle not passing the return allowing action line.

In response to the front wheel of the current vehicle not passing the return allowing action line, it may be considered that the current vehicle does not leave the original lane. In this case, in response to the lane change operation being canceled, it is less dangerous for the current vehicle to continue traveling in the original lane, so it is unnecessary to determine the return collision safety detection time period. The travel collision safety detection time period is compared with the first preset threshold. In response to the travel collision safety detection time period being less than the first preset threshold, it is considered that there is a large possibility of a collision in response to the current vehicle continuing changing a lane to the target lane, and then S208 is executed; and in response to the travel collision safety detection time period being greater than the first preset threshold, it is considered that there is a small possibility of a collision in response to the current vehicle continuing changing a lane to the target lane, and then S209 is executed.

The first preset threshold is time data set according to an empirical value. In response to the travel collision safety detection time period being less than the first preset threshold, it is considered that a probability of a collision of the current vehicle during longitudinal traveling into the target lane is high. The first preset threshold may be set in advance. Different empirical values may be set for different vehicles, which are not limited by the embodiment of the present invention.

In step S208, the collision avoidance strategy is determined as a return strategy.

In step S209, the collision avoidance strategy is determined as a travel strategy.

In step S210, in response to the front wheel of the current vehicle being located between the return allowing action line and the return prohibiting action line, the collision avoidance strategy is determined according to a magnitude relation among the travel collision safety detection time period, the return collision safety detection time period, the first preset threshold and a second preset threshold.

In response to the front wheel of the current vehicle being located between the return allowing action line and the return prohibiting action line, it may be considered that the position of the current vehicle is on the lane line shared by the target lane and the original lane and is in a state of passing the lane line. In this case, in response to the lane change operation being canceled, a vehicle in the original lane and at least one vehicle in the target lane possibly cause great danger to the current vehicle, so it is necessary to comprehensively consider the travel collision safety detection time period and the return collision safety detection time period, so as to determine the collision avoidance strategy according to the magnitude relation among the travel collision safety detection time period, the return collision safety detection time period, the first preset threshold and the second preset threshold. The second preset threshold and the first preset threshold are similar and are time data set according to the empirical value. In response to the return collision safety detection time period being less than the second preset threshold, it is considered that a probability of a collision during longitudinal traveling in returning to the original lane is high. The second preset threshold may be set in advance. Different empirical values may be set for different vehicles, which are not limited by the embodiment of the present invention.

The operation that the collision avoidance strategy is determined according to the magnitude relation among the travel collision safety detection time period, the return collision safety detection time period, the first preset threshold and the second preset threshold includes the steps as follows.

In step S2101, in response to the travel collision safety detection time period being greater than the first preset threshold, the collision avoidance strategy is determined as a driving strategy; and in response to the travel collision safety detection time period being less than or equal to the first preset threshold, whether the return collision safety detection time period is less than the second preset threshold is determined.

In response to the travel collision safety detection time period being greater than the first preset threshold, it may be considered that there is a small possibility of a collision under the condition that the current vehicle continues changing a lane to the target lane. In this case, the collision avoidance strategy may be determined as the driving strategy for continuous lane change. In response to the travel collision safety detection time being less than the first preset threshold, it may be considered that there is a large possibility of a collision under the condition that the current vehicle continues changing a lane to the target lane. In this case, it is necessary to determine a possibility of a collision in response to the current vehicle returning to the original lane according to the return collision safety detection time period and compare a possibility of a collision during travel with a possibility of a collision during return so as to determine the collision avoidance strategy with a low risk.

In step S2102, in response to the return collision safety detection time period being less than the second preset threshold, the current vehicle is controlled to travel on a lane line and give an alarm.

In response to the return collision safety detection time being less than the second preset threshold, it may be considered that there is a large possibility of a collision under the condition that the current vehicle returns to the original lane. Meanwhile, there is a large possibility of a collision in response to the current vehicle changing a lane to the target lane. In this case, it is difficult to select an appropriate collision avoidance strategy to make automatic lane change continue, which requires a driver to intervene and select an appropriate driving mode to reduce a possibility of a collision. To avoid a lateral and longitudinal runaway of the current vehicle before the driver takes charge of the current vehicle, the current vehicle is controlled to travel across a line along the overlapping lane line shared by the original lane and the target lane, and give an alarm by turning on double flashing warning lights. Optionally, exiting may be executed after traveling for 2 second across a line, or the driver may manually exit a mode of traveling across a line after taking charge of the current vehicle.

The operation that the current vehicle is controlled to travel across a line includes the following steps. According to a lateral distance between a center line of the current vehicle and a closest lane line, the current vehicle is controlled to travel along a track, with the lateral distance smaller than a preset deviation.

The position of the current vehicle is on a lane line adjacent to the target lane and the original lane, so the closest lane line is a shared lane line. A lateral distance between a center of the current vehicle and the lane line may be understood as a lateral deviation between the current vehicle and the lane line. The current vehicle is controlled to travel along the lane line according to the track having the lateral distance smaller than the preset deviation, so as to travel on the shared lane line.

In step S2103, in response to the return collision safety detection time being greater than the second preset threshold, the collision avoidance strategy is determined according to the travel collision safety detection time period and the return collision safety detection time period.

In response to the travel collision safety detection time being greater than the return collision safety detection time period, it may be considered that a possibility of a collision under the condition that the current vehicle returns to the original lane is greater than a possibility of a collision in response to the current vehicle continues changing a lane to the target lane in a current driving state, so the collision avoidance strategy is determined as the travel strategy. In response to the travel collision safety detection time being less than the return collision safety detection time period, it may be considered that the possibility of the collision under the condition that the current vehicle continues changing a lane to the target lane is greater than the possibility of the collision in response to the current vehicle returning to the original lane in the current driving state, so the collision avoidance strategy is determined as the return strategy.

In response to determining the collision avoidance strategy, a "safety responsibility model" may further be created. The safety responsibility model indicates an implementation solution for realizing a lane change safety state by means of a certain weight factor, and sets weights of the travel collision safety detection time period and the return collision safety detection time period respectively, which are indicated as follows:

$$\alpha ETTC(mov) + \beta ETTC(ret) = ETTC$$

$$\alpha + \beta = 1$$

*ETTC(mov)* is travel collision safety detection time period, *ETTC(ret)* is return collision safety detection time period, *ETTC* is a collision time period of realizing a final lane change safety state, $\alpha$ is a lane change travel risk factor, and $\beta$ is a lane change return risk factor.

*ETTC* may be understood as the collision time period in response to a vehicle changing a lane at the current velocity and has a closest distance from a vehicle in the target lane as a safe distance $D_{safe}$ after completing lane change, may be computed according to a longitudinal distance between the current vehicle and the target vehicle, the safe distance and a vehicle driving velocity, and may be considered as a set threshold for determining a lane change risk.

The travel collision safety detection time period and the return collision safety detection time period are normalized by means of risk factors. It may be understood that, in response to *ETTC(mov)>ETTC(ret)*, a risk factor (namely weight factor) in the corresponding safety responsibility model satisfies $\alpha<\beta$, which indicates that in this case, a lane change travel risk is less than a lane change return risk, and it may be determined that it is safer for the current vehicle to continue changing a lane. In response to *ETTC(mov)<ETTC(ret)*, a risk factor (namely weight factor) in the corresponding safety responsibility model satisfies a>p, which indicates that in this case, a lane change travel risk is greater than a lane change return risk, and it may be determined that it is safer for the current vehicle to return to the original lane.

In step S211, the collision avoidance strategy is determined as the travel strategy in response to the rear wheel of the current vehicle passing the return prohibiting action line.

In response to the rear wheel of the current vehicle passing the return prohibiting action line, it may be considered that the current vehicle completely enters the target lane. In this case, it is dangerous for the current vehicle to cancel the lane change operation, return to the original lane and travel, but it is less dangerous for the current vehicle to continue traveling in the target lane, so the collision avoidance strategy is determined as the travel strategy.

In response to a target vehicle before the current vehicle being detected to have a sudden collision danger, the current vehicle is controlled to be subjected to following control after the target vehicle decelerates. In response to deceleration of the target vehicle causing the current vehicle to trigger an emergency braking function, the current vehicle exits automatic lane change and gives an alarm, and then the driver takes charge of the current vehicle.

In step S212, the current vehicle is controlled to execute the collision avoidance strategy.

In response to the collision avoidance strategy being the return strategy, a return track is planned for the current vehicle, and the current vehicle is controlled to return to the original lane along the return track. In response to the collision avoidance strategy is the travel strategy, a new lane change track is planned for the current vehicle, and the current vehicle is controlled to continue changing a lane to the target lane and travel along the new lane change track.

In the technical solution of the embodiment, in response to the lane change abnormality being existed during the lane change operation, a lane change state is determined according to the lane change virtual action lines determined by means of the lane line shared by the original lane and the target lane and the position of the current vehicle. In different lane change states, possibilities of collisions under the conditions that the current vehicle continues changing a lane and returns to the original lane are determined by means of the travel collision safety detection time period and the return collision safety detection time period, the driving strategy with a low collision probability is selected as the collision avoidance strategy, and the current vehicle is controlled to travel according to the collision avoidance strategy. Moreover, in response to a collision cannot be avoided, the current vehicle exits automatic lane change control in time, then the driver takes charge of the current vehicle, and the current vehicle is kept traveling across a line before being taken charge of, so as to minimize a possibility of a collision and improve driving safety of the current vehicle.

Embodiment Three

Fig. 4 is a flowchart of a method for collision avoidance control of automatic lane change provided in Embodiment Three of the present invention. The technical solution of the embodiment is described on the basis of the above technical solution. In the embodiment, conditions before a vehicle enters an automatic lane change mode are described, and the method includes the steps as follows.

In step S301, whether a current vehicle satisfies an automatic lane change condition is determined.

The automatic lane change condition includes that lateral movement risk collision time period is greater than a third preset threshold, and the travel collision safety detection time period of the current vehicle is greater than a first preset threshold.

In response to determining that the current vehicle automatically changes a lane, whether there is a vehicle having a lateral overlap with the current vehicle is determined by means of radars mounted on a vehicle body. In response to a vehicle having a lateral overlap with the current vehicle, the vehicle is taken as the target vehicle, a lateral velocity and a lateral acceleration of the vehicle as well as a lateral relative distance between the vehicle and the current vehicle are acquired, and a lateral velocity and a lateral acceleration of the current vehicle are acquired. The lateral movement risk collision time period is determined according to the acquired parameters. The lateral movement risk collision time period may be indicated as:

$$ETTC_{lateral} = \frac{-(V'_{TV} - V'_{SV}) - \sqrt{(V'_{TV} - V'_{SV})^2 - 2 * (a'_{TV} - a'_{SV}) * X'_c}}{(a'_{TV} - a'_{SV})}$$

$V'_{TV}$ may be indicated as a lateral velocity of a target vehicle, $V'_{SV}$ may be indicated as the lateral velocity of the current vehicle, $a'_{TV}$ may be indicated as a lateral acceleration of the target vehicle, $a'_{SV}$ may be indicated as the lateral acceleration of the current vehicle, and $X'_c$ may be indicated as a lateral distance between the target vehicle and the current vehicle.

In response to the lateral movement risk collision time period being greater than the third preset threshold, it may be considered that the vehicle having the lateral overlap with the current vehicle cannot pose a collision threat to lane change of the current vehicle. In response to the travel collision safety detection time period being greater than the first preset threshold, it may be considered that a vehicle in a target lane to which the current vehicle is expected to change a lane and travel cannot pose a collision threat to the current vehicle, thus when the above two conditions are met, it is considered that the current vehicle satisfies the automatic lane change condition. In response to the current vehicle satisfying the automatic lane change condition, step S302 is executed, and in response to the current vehicle not meeting the automatic lane change condition, step S303 is executed.

The third preset threshold is time data set according to an empirical value, which is not limited by the embodiment of the present invention.

In step S302, the current vehicle is controlled to automatically change a lane according to a lane change track.

The operation that the lane change track is determined includes the following steps. A velocity, a yaw velocity, a lateral distance between a center of a vehicle head and a lane line shared by the target lane and an original lane, and an angle of the current vehicle relative to a center line of the target lane at a current moment of the current vehicle are acquired. The above parameters are substituted into a lane line equation so as to obtain the lane change track, and the current vehicle is controlled to enter an automatic lane change process according to the lane change track.

For example, the lane line equation may be indicated as:

$$Y = \frac{\omega_s'}{6V_X} * X^3 + \frac{\omega_s}{2V_X} * X^2 + \varphi * X + C_0$$

A vehicle coordinate system is created by taking a vehicle center of the current vehicle as an origin, Y as a lateral distance, leftward as positive, X as a longitudinal distance and forward as positive, $\omega_s$ is the yaw velocity of the current vehicle, $V_x$ is the velocity at the current moment of the current vehicle, $\varphi$ is the angle of the current vehicle relative to the center line of the target lane, and Co is the lateral distance between the center of the vehicle head and the lane line shared with the original lane in the target lane.

In step S303, the current vehicle is controlled to decelerate and update the lane change track to further determine whether the current vehicle satisfies the automatic lane change condition.

In response to the current vehicle not meeting the automatic lane change condition, it may be considered that the current vehicle has at least one of two problems that there is a vehicle in a lateral direction of the current vehicle and a vehicle velocity of the current vehicle is too high. The existence of a vehicle in the lateral direction of the current vehicle cannot be controlled by the current vehicle. In response to the vehicle velocity is too high, the current vehicle is controlled to decelerate, the lane change track is computed again according to driving parameters of the current vehicle after deceleration to update the lane change track. Whether current driving parameters of the current vehicle meet the automatic lane change condition is determined. In response to the current vehicle satisfying the automatic lane change condition, the current vehicle is controlled to automatically change a lane according to the updated lane change track, and in response to the current vehicle not meeting the automatic lane change condition, the step is executed again so as to update the lane change track.

In step S304, driving parameters of the current vehicle, driving parameters of at least one target vehicle, and road information are acquired in response to the current vehicle executing a lane change operation.

In step S305, the travel collision safety detection time period, the return collision safety detection time period, and lane change virtual action lines are determined according to the driving parameters of the current vehicle, the driving parameters of the at least one target vehicle, and the road information.

In step S306, in response to a lane change abnormality being detected, a collision avoidance strategy is determined according to a positional relation between the current vehicle and each lane change virtual action line, the travel collision safety detection time period, and the return collision safety detection time period to control the current vehicle to execute the collision avoidance strategy.

In the technical solution of the embodiment, before the current vehicle enters an automatic lane change mode, the lateral movement risk collision time period of the target vehicle having a lateral overlap with the current vehicle and the travel collision safety detection time period of the target vehicle in the target lane are computed. In response to all the above parameters meeting the automatic lane change condition, the lane change track is determined according to the driving parameters of the current vehicle at the current moment. The current vehicle is enabled to automatically change a lane and travel according to the lane change track, thereby reducing a possibility of a collision in response to the current vehicle automatically changing a lane and improving driving safety of the current vehicle.

Embodiment Four

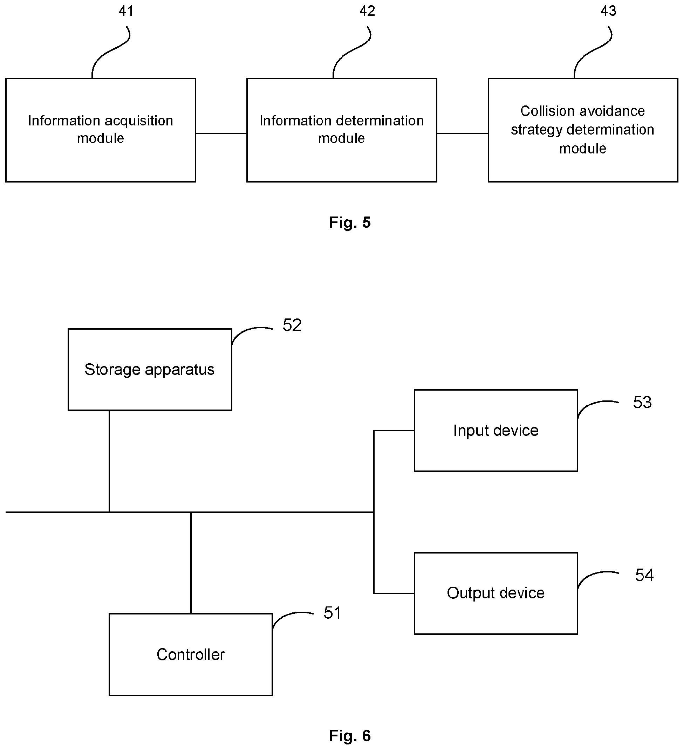

Fig. 5 is a structural schematic diagram of an apparatus for collision avoidance control of automatic lane change provided in Embodiment Four of the present invention. The apparatus for collision avoidance control of automatic lane change includes: an information acquisition module 41, an information determination module 42 and a collision avoidance strategy determination module 43.

The information acquisition module 41 is configured to acquire driving parameters of a current vehicle, driving parameters of at least one target vehicle, and road information in response to the current vehicle executing a lane change operation. The information determination module 42 is configured to determine a travel collision safety detection time period, a return collision safety detection time period, and lane change virtual action lines according to the driving parameters of the current vehicle, the driving parameters of the at least one target vehicle, and the road information. The collision avoidance strategy determination module 43 is configured to determine, in response to a lane change abnormality being detected, a collision avoidance strategy according to a positional relation between the current vehicle and the lane change virtual action lines, the travel collision safety detection time period, and the return collision safety detection time period to control the current vehicle to execute the collision avoidance strategy.

In the technical solution of the embodiment, a problem that it is difficult to determine the collision avoidance strategy with a lowest risk in response to the current vehicle encountering the lane change abnormality during automatic lane change is solved, a possibility of a collision in response to the current vehicle encountering an automatic lane change abnormality is decreased, severity of a collision in response to a collision being inevitable is reduced, and driving safety of the current vehicle is improved.

The at least one target vehicle includes at least one vehicle before and behind the current vehicle in an original lane and at least one vehicle before and behind the current vehicle in a target lane. The driving parameters of the current vehicle at least include a longitudinal velocity of the current vehicle, a longitudinal acceleration of the current vehicle and a position of the current vehicle. The driving parameters of the at least one target vehicle at least include a longitudinal velocity of each target vehicle, a longitudinal acceleration of each target vehicle and a position of each target vehicle. The lane change virtual action lines include a return allowing action line and a return prohibiting action line.

Optionally, the information determination module 42 includes: a safety detection time determination unit configured to determine the collision safety detection time period of each target vehicle and the current vehicle according to the longitudinal velocity of the current vehicle, the longitudinal acceleration of the current vehicle, the longitudinal velocity of each target vehicle, the longitudinal acceleration of each target vehicle, a longitudinal relative distance between each target vehicle and the current vehicle; and a virtual action line determination unit configured to determine the lane change virtual action lines according to the position of the current vehicle and a position of a lane line shared by the target lane and the original lane.

The safety detection time determination unit is configured to determine the minimum collision safety detection time period from collision safety detection time periods of all target vehicles in the target lane and the current vehicle as the travel collision safety detection time period; and to determine the minimum collision safety detection time period from collision safety detection time periods of all target vehicles in the original lane and the current vehicle as the return collision safety detection time period.

Optionally, the collision avoidance strategy determination module 43 is configured to: determine whether the travel collision safety detection time period is less than a first preset threshold in response to a front wheel of the current vehicle not passing the return allowing action line, determine the collision avoidance strategy as a return strategy in response to the travel collision safety detection time period being less than the first preset threshold, and determine the collision avoidance strategy as a travel strategy in response to the travel collision safety detection time period being greater than or equal to the first preset threshold; determine, in response to the front wheel of the current vehicle being located between the return allowing action line and the return prohibiting action line, the collision avoidance strategy according to a magnitude relation among the travel collision safety detection time period, the return collision safety detection time period, the first preset threshold and a second preset threshold; and determine the collision avoidance strategy as the travel strategy in response to a rear wheel of the current vehicle passing the return prohibiting action line.

The determining the collision avoidance strategy according to a magnitude relation among the travel collision safety detection time period, the return collision safety detection time period, the first preset threshold and a second preset threshold includes: determining the collision avoidance strategy as the travel strategy in response to the travel collision safety detection time period being greater than the first preset threshold; determining whether the return collision safety detection time period is less than the second preset threshold in response to the travel collision safety detection time period being less than or equal to the first preset threshold, and controlling the current vehicle to travel across a line and give an alarm in response to the return collision safety detection time period being less than the second preset threshold; and determining, in response to the return collision safety detection time period being greater than or equal to the second preset threshold, the collision avoidance strategy according to the travel collision safety detection time period and the return collision safety detection time period. An operation of determining the collision avoidance strategy according to the travel collision safety detection time period and the return collision safety detection time period includes the following steps. The collision avoidance strategy is determined as the travel strategy in response to the travel collision safety detection time period being greater than the return collision safety detection time period. The collision avoidance strategy is determined as the return strategy in response to the travel collision safety detection time period being less than the return collision safety detection time period.

Optionally, the apparatus further includes: a lane change track determination module configured to determine whether the current vehicle satisfies an automatic lane change condition; control the current vehicle to automatically change a lane according to a lane change track in response to the current vehicle satisfying the automatic lane change condition; and control the current vehicle to decelerate and update the lane change track in response to the current vehicle not meeting the automatic lane change condition to further determine whether the current vehicle satisfies the automatic lane change condition. The automatic lane change condition includes a lateral movement risk collision time period being greater than a third preset threshold, and the travel collision safety detection time period of the current vehicle being greater than the first preset threshold.

The operation that the lane change track is determined includes the following steps. A velocity, a yaw velocity, a lateral distance between a center of a vehicle head and a lane line shared by the target lane and the original lane, and an angle of the current vehicle relative to a center line of the target lane at a current moment of the current vehicle are acquired. The velocity, the yaw velocity, the lateral distance between the center of the vehicle head and the lane line shared with the original lane in the target lane, and the angle of the current vehicle relative to the center line of the target lane at the current moment of the current vehicle are substituted into a lane line equation so as to determine the lane change track.

The apparatus for collision avoidance control of automatic lane change provided in the embodiment of the present invention may execute the method for collision avoidance control of automatic lane change provided in any embodiment of the present invention, and has corresponding functional modules upon execution of the method.

Embodiment Five

Fig. 6 is a structural schematic diagram of a vehicle provided in Embodiment Five of the present invention. As shown in Fig. 6, the vehicle includes a controller 51, a storage apparatus 52, an input device 53 and an output device 54. There may be at least one controller 51 in the vehicle, and a controller 51 is taken as an example in Fig. 6. The controller 51, the storage apparatus 52, the input device 53 and the output device 54 in the vehicle may be connected by means of buses or in other ways. Bus connection is taken as an example in Fig. 6.

As a computer readable storage medium, the storage apparatus 52 may be set as a storage software program, a computer executable program and a module, such as a program instruction/module corresponding to the method for collision avoidance control of automatic lane change in the embodiments of the present invention (such as an information acquisition module 41, an information determination module 42 and a collision avoidance strategy determination module 43). The controller 51 executes various functional applications of the vehicle and data processing by traveling a software program, an instruction and a module stored in the storage apparatus 52, thereby implementing the method for collision avoidance control of automatic lane change.

The storage apparatus 52 may mainly include a program storage area and a data storage area, where the program storage area may store an operating system and an application program required for at least one function; and the data storage area may store data, etc. created according to usage of a terminal. The storage apparatus 52 may include a high-velocity random access memory, and may further include a non-volatile memory, for example, at least one magnetic disk memory device, a flash memory device, or other non-volatile solid-state memory devices. In some examples, the storage apparatus 52 may include a memory remotely set with respect to the controller 51, and the remote memories may be connected with the vehicle by means of a network. Examples of the networks include, but are not limited to, the Internet, enterprise intranets, local area networks, mobile communication networks, and combinations thereof.

The input device 53 may be set to receive input digital or character information and generate key signal input related to user settings and function control of the vehicle. The output device 54 may include display devices such as a display screen.

Embodiment Six

Embodiment Six of the present invention further provides a storage medium including at least one computer executable instruction, and the at least one computer executable instruction is configured to execute a method for collision avoidance control of automatic lane change in response to being executed by a computer processor. The method includes the following steps that: driving parameters of a current vehicle, driving parameters of at least one target vehicle, and road information are acquired in response to the current vehicle executing a lane change operation; a travel collision safety detection time period, a return collision safety detection time period, and lane change virtual action lines are determined according to the driving parameters of the current vehicle, the driving parameters of the at least one target vehicle, and the road information; and in response to a lane change abnormality being detected, a collision avoidance strategy is determined according to a positional relation between the current vehicle and the lane change virtual action lines, the travel collision safety detection time period, and the return collision safety detection time period to control the current vehicle to execute the collision avoidance strategy. The at least one target vehicle includes at least one vehicle before and behind the current vehicle in an original lane and at least one vehicle before and behind the current vehicle in a target lane.

Obviously, in the storage medium including the computer executable instruction provided in the embodiment of the present invention, the computer executable instruction is not limited by method operations described above, and may further execute related operations in the method for collision avoidance control of automatic lane change provided in any embodiment of the present invention.

From the description of the embodiments, it may be clearly understood by those skilled in the art that the present invention may be implemented by means of software and general hardware, and may be certainly implemented by hardware. Based on such understanding, the technical solution of the present invention may be embodied in the form of software products in essence or in part that contributes to related technologies, the computer software products may be stored in the computer readable storage medium, such as a floppy disk, a read-only memory (ROM), a random access memory (RAM), a flash memory, a hard disk and an optical disk of a computer, and several instructions are included to make a computer device (which may be a personal computer, a server, a network device, etc.) execute the method described in multiple embodiments of the present invention.

It is worth noting that multiple units and modules included in an embodiment of a searching device are divided according to a functional logic, but are not limited to the above division, as long as the corresponding functions may be realized. Moreover, names of multiple functional units are for the convenience of mutual distinguishing, and are not used for limiting the protection scope of the present invention, which is defined by the appended claims.

## Claims

1. A method for collision avoidance control of automatic lane change, comprising:

   acquiring (S101/S201/S304) driving parameters of a current vehicle, driving parameters of at least one target vehicle, and road information in response to the current vehicle executing a lane change operation;

   determining (S102/S305) a travel collision safety detection time period, a return collision safety detection time period, and lane change virtual action lines according to the driving parameters of the current vehicle, the driving parameters of the at least one target vehicle, and the road information; and

   determining (S103/S206/S306), in response to a lane change abnormality being detected, a collision avoidance strategy according to a positional relation between the current vehicle and the lane change virtual action lines, the travel collision safety detection time period, and the return collision safety detection time period to control the current vehicle to execute the collision avoidance strategy;

   wherein the at least one target vehicle comprises at least one vehicle before and behind the current vehicle in an original lane and at least one vehicle before and behind the current vehicle in a target lane; the travel collision safety detection time period indicates the shortest time period of a collision between the current vehicle and each target vehicle in the target lane in response to the current vehicle executing the lane change operation with a current velocity of the current vehicle unchanged; the return collision safety detection time period indicates the shortest time period of a collision between the current vehicle and each target vehicle in the original lane in response to the current vehicle returning from a current position of the current vehicle to the original lane with the current velocity of the current vehicle unchanged; the lane change virtual action lines are determined according to a position of a lane line shared by the target lane and the original lane, and the lane change virtual action lines are a virtual action line on a first side of the shared lane line and a virtual action line on a second side of the shared lane line.

2. The method as claimed in claim 1, wherein the driving parameters of the current vehicle at least comprise a longitudinal velocity of the current vehicle, a longitudinal acceleration of the current vehicle and a position of the current vehicle; the driving parameters of the at least one target vehicle at least comprise a longitudinal velocity of each target vehicle, a longitudinal acceleration of each target vehicle and a position of each target vehicle; and determining the travel collision safety detection time period, the return collision safety detection time period, and the lane change virtual action lines according to the driving parameters of the current vehicle, the driving parameters of the at least one target vehicle, and the road information comprises:

   determining (S202) a collision safety detection time period between each target vehicle and the current vehicle according to the longitudinal velocity of the current vehicle, the longitudinal acceleration of the current vehicle, the longitudinal velocity of each target vehicle, the longitudinal acceleration of each target vehicle, and a longitudinal relative distance between each target vehicle and the current vehicle;

   determining (S203) the minimum collision safety detection time period from collision safety detection time periods of all target vehicles in the target lane and the current vehicle as the travel collision safety detection time period;

   determining (S204) the minimum collision safety detection time period from collision safety detection time periods of all target vehicles in the original lane and the current vehicle as the return collision safety detection time period; and
determining (S205) the lane change virtual action lines according to the position of the current vehicle and the position of the lane line shared by the target lane and the original lane.

3. The method as claimed in claim 2, wherein the lane change virtual action lines comprises a return allowing action line and a return prohibiting action line, and determining the collision avoidance strategy according to the positional relation between the current vehicle and the lane change virtual action lines, the travel collision safety detection time period, and the return collision safety detection time period comprises:

determining (S207) whether the travel collision safety detection time period is less than a first preset threshold in response to a front wheel of the current vehicle not passing the return allowing action line, determining (S208) the collision avoidance strategy as a return strategy in response to determining that the travel collision safety detection time period is less than the first preset threshold, and determining (S209) the collision avoidance strategy as a travel strategy in response to determining that the travel collision safety detection time period is greater than or equal to the first preset threshold;
determining (S210), in response to the front wheel of the current vehicle being located between the return allowing action line and the return prohibiting action line, the collision avoidance strategy according to a magnitude relation among the travel collision safety detection time period, the return collision safety detection time period, the first preset threshold and a second preset threshold; and
determining (S211) the collision avoidance strategy as the travel strategy in response to a rear wheel of the current vehicle passing the return prohibiting action line.

4. The method as claimed in claim 3, wherein determining the collision avoidance strategy according to the magnitude relation among the travel collision safety detection time period, the return collision safety detection time period, the first preset threshold and a second preset threshold comprises:

determining the collision avoidance strategy as the travel strategy in response to the travel collision safety detection time period being greater than the first preset threshold;
determining whether the return collision safety detection time period is less than the second preset threshold in response to the travel collision safety detection time period being less than or equal to the first preset threshold, and controlling the current vehicle to travel on a lane line and give an alarm in response to determining the return collision safety detection time period being less than the second preset threshold; and
determining the collision avoidance strategy according to the travel collision safety detection time period and the return collision safety detection time period in response to determining that the return collision safety detection time period is greater than or equal to the second preset threshold,
wherein determining the collision avoidance strategy according to the travel collision safety detection time period and the return collision safety detection time period comprises: determining the collision avoidance strategy as the travel strategy in response to the travel collision safety detection time period being greater than the return collision safety detection time period; and determining the collision avoidance strategy as the return strategy in response to the travel collision safety detection time period being less than the return collision safety detection time period.

5. The method as claimed in claim 4, wherein the controlling the current vehicle to travel on a lane line comprises: controlling, according to a lateral distance between a center line of the current vehicle and a closest lane line, the current vehicle to travel along a track, with the lateral distance smaller than a preset deviation.

6. The method as claimed in claim 1, wherein before executing the lane change operation, the method further comprises:

determining (S301) whether the current vehicle satisfies an automatic lane change condition;
controlling (S302) the current vehicle to automatically change a lane according to a lane change track in response to determining that the current vehicle satisfies the automatic lane change condition; and
controlling (S303) the current vehicle to decelerate and update the lane change track in response to determining that the current vehicle does not satisfy the automatic lane change condition to further determine whether the current vehicle satisfies the automatic lane change condition,
wherein the automatic lane change condition comprises a lateral movement risk collision time period being greater than a third preset threshold, and travel collision safety detection time period of the current vehicle being greater than the first preset threshold.

7. The method as claimed in claim 6, wherein determining the lane change track comprises:

acquiring a velocity, a yaw velocity, a lateral distance between a center of a vehicle head and the shared lane line, and an angle of the current vehicle relative to a center line of the target lane at a current moment of the current vehicle; and
substituting the velocity, the yaw velocity, the lateral distance between the center of the vehicle head and the shared lane line, and the angle of the current vehicle relative to the center line of the target lane at the current moment of the current vehicle into a lane line equation to determine the lane change track.

8. An apparatus for collision avoidance control of automatic lane change, comprising:

an information acquisition module (41) configured to acquire driving parameters of a current vehicle, driving parameters of at least one target vehicle, and road information in response to the current vehicle executing a lane change operation;
an information determination module (42) configured to determine a travel collision safety detection time period, a return collision safety detection time period, and lane change virtual action lines according to the driving parameters of the current vehicle, the driving parameters of the at least one target vehicle, and the road information; and
a collision avoidance strategy determination module (43) configured to determine, in response to a lane change abnormality being detected, a collision avoidance strategy according to a positional relation between the current vehicle and the lane change virtual action lines, the travel collision safety detection time period, and the return collision safety detection time period to control the current vehicle to execute the collision avoidance strategy;
wherein the at least one target vehicle comprises at least one vehicle before and behind the current vehicle in an original lane and at least one vehicle before and behind the current vehicle in a target lane.

9. A vehicle comprising:

the apparatus of claim 8; at least one controller (51); and
a storage apparatus (52) configured to store at least one program,
wherein the at least one controller implements the method for collision avoidance control of automatic lane change as claimed in any one of claims 1-7 in response to executing the at least one program.

10. A storage medium comprising at least one computer executable instruction, wherein the at least one computer executable instruction is configured to execute the method for collision avoidance control of automatic lane change as claimed in any one of claims 1-7 in response to being executed by a computer processor.


**Patentansprüche**

1. Verfahren zur Kollisionsvermeidungssteuerung eines automatischen Fahrspurwechsels, umfassend:

Erfassen (S101/S201/S304) von Fahrparametern eines aktuellen Fahrzeugs, von Fahrparametern mindestens eines Zielfahrzeugs und von Straßeninformationen als Antwort auf das Ausführen eines Fahrspurwechselvorgangs durch das aktuelle Fahrzeug;
Bestimmen (S102/S305) einer Zeitdauer für die Fahrtkollisionssicherheitsfeststellung, einer Zeitdauer für die Rückkehrkollisionssicherheitsfeststellung und virtueller Fahrspurwechselaktionslinien nach den Fahrparametern des aktuellen Fahrzeugs, den Fahrparametern des mindestens einen Zielfahrzeugs und den Straßeninformationen; und
Bestimmen (S103/S206/S306), als Antwort auf das Feststellen einer Fahrspurwechselanomalie, einer Kollisionsvermeidungsstrategie nach einer Positionsbeziehung zwischen dem aktuellen Fahrzeug und den virtuellen Fahrspurwechselaktionslinien, der Zeitdauer für die Fahrtkollisionssicherheitsfeststellung und der Zeitdauer für die Rückkehrkollisionssicherheitsfeststellung zum Steuern des aktuellen Fahrzeugs, um die Kollisionsvermeidungsstrategie auszuführen;
wobei das mindestens eine Zielfahrzeug mindestens ein Fahrzeug vor und hinter dem aktuellen Fahrzeug in einer ursprünglichen Fahrspur und mindestens ein Fahrzeug vor und hinter dem aktuellen Fahrzeug in einer Zielfahrspur umfasst; die Zeitdauer für die Fahrtkollisionssicherheitsfeststellung die kürzeste Zeitdauer einer Kollision zwischen dem aktuellen Fahrzeug und jedem Zielfahrzeug in der Zielfahrspur als Antwort auf das aktuelle Fahrzeug angibt, das den Fahrspurwechselvorgang mit einer unveränderten aktuellen Geschwindigkeit des aktuellen Fahrzeugs ausführt; die Zeitdauer für die Rückkehrkollisionssicherheitsfeststellung die kürzeste Zeitdauer einer Kollision zwischen dem aktuellen Fahrzeug und jedem Zielfahrzeug in der ursprünglichen Fahrspur als Antwort auf das aktuelle Fahrzeug angibt, das von einer aktuellen Position des aktuellen Fahrzeugs zur ursprünglichen Fahrspur mit unveränderter aktueller Geschwindigkeit des aktuellen Fahrzeugs zurückkehrt; die virtuellen Fahrspurwechselaktionslinien nach einer Position einer Fahrspurlinie bestimmt werden, die von der Zielfahrspur und der ursprünglichen Fahrspur geteilt wird, und die virtuellen Fahrspurwechselaktionslinien eine virtuelle Aktionslinie auf einer ersten Seite der geteilten Fahrspurlinie und eine virtuelle Aktionslinie auf einer zweiten Seite der geteilten Fahrspurlinie sind.

2. Verfahren nach Anspruch 1, wobei die Fahrparameter des aktuellen Fahrzeugs mindestens eine Längsgeschwindigkeit des aktuellen Fahrzeugs, eine Längsbeschleunigung des aktuellen Fahrzeugs und eine Position des aktuellen Fahrzeugs umfassen; die Fahrparameter des mindestens einen Zielfahrzeugs mindestens eine Längsgeschwindigkeit jedes Zielfahrzeugs, eine Längsbeschleunigung jedes Zielfahrzeugs und eine Position jedes Zielfahrzeugs umfassen; und

Bestimmen der Zeitdauer für die Fahrtkollisionssicherheitsfeststellung, der Zeitdauer für die Rückkehrkollisionssicherheitsfeststellung und der virtuellen Fahrspurwechselaktionslinien nach den Fahrparametern des aktuellen Fahrzeugs, den Fahrparametern des mindestens einen Zielfahrzeugs und den Straßeninformationen Folgendes umfasst:

Bestimmen (S202) einer Zeitdauer für die Kollisionssicherheitsfeststellung zwischen jedem Zielfahrzeug und dem aktuellen Fahrzeug nach der Längsgeschwindigkeit des aktuellen Fahrzeugs, der Längsbeschleunigung des aktuellen Fahrzeugs, der Längsgeschwindigkeit jedes Zielfahrzeugs, der Längsbeschleunigung jedes Zielfahrzeugs und einem relativen Längsabstand zwischen jedem Zielfahrzeug und dem aktuellen Fahrzeug;
Bestimmen (S203) der minimalen Zeitdauer für die Kollisionssicherheitsfeststellung aus den Zeitdauern für die Kollisionssicherheitsfeststellungen aller Zielfahrzeuge in der Zielfahrspur und des aktuellen Fahrzeugs als die Zeitdauer für die Fahrtkollisionssicherheitsfeststellung;
Bestimmen (S204) der minimalen Zeitdauer für die Kollisionssicherheitsfeststellung aus den Zeitdauern für die Kollisionssicherheitsfeststellungen aller Zielfahrzeuge in der ursprünglichen Fahrspur und des aktuellen Fahrzeugs als die Zeitdauer für die Rückkehrkollisionssicherheitsfeststellung; und
Bestimmen (S205) der virtuellen Fahrspurwechselaktionslinien nach der Position des aktuellen Fahrzeugs und der Position der Fahrspurlinie, die von der Zielfahrspur und der ursprünglichen Fahrspur geteilt wird.

3. Verfahren nach Anspruch 2, wobei die virtuellen Fahrspurwechselaktionslinien eine Rückkehrerlaubnisaktionslinie und eine Rückkehrverbotsaktionslinie umfassen und das Bestimmen der Kollisionsvermeidungsstrategie nach der Positionsbeziehung zwischen dem aktuellen Fahrzeug und den virtuellen Fahrspurwechselaktionslinien, der Zeitdauer für die Fahrtkollisionssicherheitsfeststellung und der Zeitdauer für die Rückkehrkollisionssicherheitsfeststellung Folgendes umfasst:

Bestimmen (S207), ob die Zeitdauer für die Fahrtkollisionssicherheitsfeststellung kleiner als ein erster vorgegebener Schwellenwert ist, als Antwort darauf, dass ein Vorderrad des aktuellen Fahrzeugs die Rückkehrerlaubnisaktionslinie nicht passiert, Bestimmen (S208) der Kollisionsvermeidungsstrategie als Rückkehrstrategie als Antwort auf das Bestimmen, dass die Zeitdauer für die Fahrtkollisionssicherheitsfeststellung kleiner als der erste vorgegebene Schwellenwert ist, und Bestimmen (S209) der Kollisionsvermeidungsstrategie als Fahrtstrategie als Antwort auf das Bestimmen, dass die Zeitdauer für die Fahrtkollisionssicherheitsfeststellung größer als oder gleich dem ersten vorgegebenen Schwellenwert ist;
Bestimmen (S210), als Antwort darauf, dass sich das Vorderrad des aktuellen Fahrzeugs zwischen der Rückkehrerlaubnisaktionslinie und der Rückkehrverbotsaktionslinie befindet, der Kollisionsvermeidungsstrategie nach einer Größenbeziehung zwischen der Zeitdauer für die Fahrtkollisionssicherheitsfeststellung, der Zeitdauer für die Rückkehrkollisionssicherheitsfeststellung, dem ersten vorgegebenen Schwellenwert und einem zweiten vorgegebenen Schwellenwert; und
Bestimmen (S211) der Kollisionsvermeidungsstrategie als Fahrtstrategie als Antwort darauf, dass ein Hinterrad des aktuellen Fahrzeugs die Rückkehrverbotsaktionslinie passiert.

4. Verfahren nach Anspruch 3, wobei das Bestimmen der Kollisionsvermeidungsstrategie nach dem Größenverhältnis zwischen der Zeitdauer für die Fahrtkollisionssicherheitsfeststellung, der Zeitdauer für die Rückkehrkollisionssicherheitsfeststellung, dem ersten vorgegebenen Schwellenwert und einem zweiten vorgegebenen Schwellenwert Folgendes umfasst:

Bestimmen der Kollisionsvermeidungsstrategie als Fahrtstrategie als Antwort darauf, dass die Zeitdauer für die Fahrtkollisionssicherheitsfeststellung größer als der erste vorgegebene Schwellenwert ist;

Bestimmen, ob die Zeitdauer für die Rückkehrkollisionssicherheitsfeststellung kleiner als der zweite vorgegebene Schwellenwert ist, als Antwort darauf, dass die Zeitdauer für die Fahrtkollisionssicherheitsfeststellung kleiner oder gleich dem ersten vorgegebenen Schwellenwert ist, und Steuern des aktuellen Fahrzeugs zum Fahren auf einer Fahrspurlinie und zum Auslösen eines Alarms als Antwort auf das Bestimmen, dass die Zeitdauer für die Rückkehrkollisionssicherheitsfeststellung kleiner als der zweite vorgegebene Schwellenwert ist; und

Bestimmen der Kollisionsvermeidungsstrategie nach der Zeitdauer für die Fahrtkollisionssicherheitsfeststellung und der Zeitdauer für die Rückkehrkollisionssicherheitsfeststellung als Antwort auf das Bestimmen, dass die Zeitdauer für die Rückkehrkollisionssicherheitsfeststellung größer als oder gleich dem zweiten vorgegebenen Schwellenwert ist, wobei das Bestimmen der Kollisionsvermeidungsstrategie nach der Zeitdauer für die Fahrtkollisionssicherheitsfeststellung und der Zeitdauer für die Rückkehrkollisionssicherheitsfeststellung Folgendes umfasst: Bestimmen der Kollisionsvermeidungsstrategie als Fahrtstrategie als Antwort darauf, dass die Zeitdauer für die Fahrtkollisionssicherheitsfeststellung größer als die Zeitdauer für die Rückkehrkollisionssicherheitsfeststellung ist; und Bestimmen der Kollisionsvermeidungsstrategie als Rückkehrstrategie als Antwort darauf, dass die Zeitdauer für die Fahrtkollisionssicherheitsfeststellung kleiner als die Zeitdauer für die Rückkehrkollisionssicherheitsfeststellung ist.

5. Verfahren nach Anspruch 4, wobei das Steuern des aktuellen Fahrzeugs zum Fahren auf einer Fahrspurlinie Folgendes umfasst:

Steuern, nach einem seitlichen Abstand zwischen einer Mittellinie des aktuellen Fahrzeugs und einer nächstliegenden Fahrspurlinie, des aktuellen Fahrzeugs zum Fahren entlang einer Bahn, wobei der seitliche Abstand kleiner als eine vorgegebene Abweichung ist.

6. Verfahren nach Anspruch 1, wobei das Verfahren vor dem Ausführen des Fahrspurwechselvorgangs ferner Folgendes umfasst:

Bestimmen (S301), ob das aktuelle Fahrzeug eine Bedingung für einen automatischen Fahrspurwechsel erfüllt;

Steuern (S302) des aktuellen Fahrzeugs zum automatischen Fahrspurwechsel nach einer Fahrspurwechselbahn als Antwort auf das Bestimmen, dass das aktuelle Fahrzeug die Bedingung für den automatischen Fahrspurwechsel erfüllt; und

Steuern (S303) des aktuellen Fahrzeugs zum Entschleunigen und Aktualisieren der Fahrspurwechselbahn als Antwort auf das Bestimmen, dass das aktuelle Fahrzeug die Bedingung für den automatischen Fahrspurwechsel nicht erfüllt, um ferner zu bestimmen, ob das aktuelle Fahrzeug die Bedingung für den automatischen Fahrspurwechsel erfüllt,

wobei die Bedingung für den automatischen Fahrspurwechsel eine Zeitdauer für die seitlichen Bewegung mit Kollisionsrisiko umfasst, die größer als ein dritter vorgegebener Schwellenwert ist, und die Zeitdauer für die Fahrtkollisionssicherheitsfeststellung des aktuellen Fahrzeugs größer als der erste vorgegebene Schwellenwert ist.

7. Verfahren nach Anspruch 6, wobei das Bestimmen der Fahrspurwechselbahn Folgendes umfasst:

Erfassen einer Geschwindigkeit, einer Giergeschwindigkeit, eines seitlichen Abstands zwischen der Mitte eines Fahrzeugkopfs und der geteilten Fahrspurlinie und eines Winkels des aktuellen Fahrzeugs relativ zu einer Mittellinie der Zielfahrspur zu einem aktuellen Zeitpunkt des aktuellen Fahrzeugs; und

Ersetzen der Geschwindigkeit, der Giergeschwindigkeit, des seitlichen Abstands zwischen der Mitte des Fahrzeugkopfs und der geteilten Fahrspurlinie und des Winkels des aktuellen Fahrzeugs relativ zur Mittellinie der Zielfahrspur zum aktuellen Zeitpunkt des aktuellen Fahrzeugs in eine Fahrspurliniengleichung, um die Fahrspurwechselbahn zu bestimmen.

8. Gerät zur Kollisionsvermeidungssteuerung eines automatischen Fahrspurwechsels, umfassend:

ein Informationserfassungsmodul (41), das konfiguriert ist, Fahrparameter eines aktuellen Fahrzeugs, Fahrparameter mindestens eines Zielfahrzeugs und Straßeninformationen als Antwort auf das Ausführen eines Fahrspurwechselvorgangs durch das aktuelle Fahrzeug zu erfassen;

ein Informationsbestimmungsmodul (42), das konfiguriert ist, eine Zeitdauer für die Fahrtkollisionssicherheitsfeststellung, eine Zeitdauer für die Rückkehrkollisionssicherheitsfeststellung und virtuelle Fahrspurwechselaktionslinien nach den Fahrparametern des aktuellen Fahrzeugs, den Fahrparametern des mindestens einen Zielfahrzeugs und den Straßeninformationen zu bestimmen; und

ein Kollisionsvermeidungsstrategiebestimmungsmodul (43), das konfiguriert ist, als Antwort auf das Feststellen einer Fahrspurwechselanomalie, eine Kollisionsvermeidungsstrategie nach einer Positionsbeziehung zwischen dem aktuellen Fahrzeug und den virtuellen Fahrspurwechselaktionslinien, der Zeitdauer für die Fahrtkollisionssicherheitsfeststellung und der Zeitdauer für die Rückkehrkollisionssicherheitsfeststellung zum Steuern des aktuellen Fahrzeugs, um die Kollisionsvermeidungsstrategie auszuführen, zu bestimmen;

wobei das mindestens eine Zielfahrzeug mindestens ein Fahrzeug vor und hinter dem aktuellen Fahrzeug in einer ursprünglichen Fahrspur und mindestens ein Fahrzeug vor und hinter dem aktuellen Fahrzeug in einer Zielfahrspur umfasst.

9. Fahrzeug, umfassend:

das Gerät nach Anspruch 8;
mindestens eine Steuerung (51); und
ein Speichergerät (52), das konfiguriert ist, mindestens ein Programm zu speichern,
wobei die mindestens eine Steuerung das Verfahren zur Kollisionsvermeidungssteuerung des automatischen Fahrspurwechsels nach einem der Ansprüche 1-7 als Antwort auf das Ausführen des mindestens einen Programms implementiert.

10. Speichermedium, umfassend mindestens eine computerausführbare Anweisung, wobei die mindestens eine computerausführbare Anweisung konfiguriert ist, das Verfahren zur Kollisionsvermeidungssteuerung des automatischen Fahrspurwechsels nach einem der Ansprüche 1 bis 7 als Antwort auf das Ausführen durch einen Computerprozessor auszuführen.

**Revendications**

1. Procédé de commande d'évitement de collision lors d'un changement de voie automatique, comprenant :
l'acquisition (S101/S201/S304) de paramètres de conduite d'un véhicule actuel, des paramètres de conduite du ou des véhicules cibles et des informations routières en réponse à l'exécution par le véhicule actuel d'une opération de changement de voie ;

la détermination (S102/S305) d'une période de détection de sécurité contre une collision lors d'un déplacement, une période de détection de sécurité contre une collision lors d'un rabattement et de lignes d'action virtuelles de changement de voie en fonction des paramètres de conduite du véhicule actuel, des paramètres de conduite du ou des véhicules cibles et des informations routières ; et
la détermination (S103/S206/S306), en réponse à la détection d'une anomalie de changement de voie, d'une stratégie d'évitement de collision en fonction d'une relation de position entre le véhicule actuel et les lignes d'action virtuelles de changement de voie, la période de détection de sécurité contre une collision lors d'un déplacement et la période de détection de sécurité contre une collision lors d'un rabattement pour commander au véhicule actuel d'exécuter la stratégie d'évitement de collision ;
dans lequel le ou les véhicules cibles comprennent au moins un véhicule devant et derrière le véhicule actuel dans une voie de départ et au moins un véhicule devant et derrière le véhicule actuel dans une voie cible ; la période de détection de sécurité contre une collision lors d'un déplacement indique la période la plus courte d'une collision entre le véhicule actuel et chaque véhicule cible dans la voie cible en réponse à l'exécution par le véhicule actuel de l'opération de changement de voie sans changement de la vitesse actuelle du véhicule actuel ; la période de détection de sécurité contre une collision lors d'un rabattement indique la période la plus courte d'une collision entre le véhicule actuel et chaque véhicule cible dans la voie de départ en réponse au rabattement du véhicule actuel d'une position actuelle du véhicule actuel à la voie de départ sans changement de la vitesse actuelle du véhicule actuel ; les lignes d'action virtuelles de changement de voie sont déterminées en fonction d'une position d'une ligne de voie partagée entre la voie cible et la voie de départ, et les lignes d'action virtuelles de changement de voie sont une ligne d'action virtuelle sur un premier côté de la ligne de voie partagée et une ligne d'action virtuelle sur un second côté de la ligne de voie partagée.

2. Procédé selon la revendication 1, dans lequel les paramètres de conduite du véhicule actuel comprennent au moins une vitesse longitudinale du véhicule actuel, une accélération longitudinale du véhicule actuel et une position du véhicule actuel ; les paramètres de conduite du ou des véhicules cibles comprennent au moins une vitesse longitudinale de chaque véhicule cible, une accélération longitudinale de chaque véhicule cible et une position de chaque véhicule cible ; et

la détermination de la période de détection de sécurité contre une collision lors d'un déplacement, de la période de détection de sécurité contre une collision lors d'un rabattement et des lignes d'action virtuelles de changement de voie en fonction des paramètres de conduite du véhicule actuel, des paramètres de conduite du ou des véhicules cibles et des informations routières comprend :

la détermination (S202) d'une période de détection de sécurité contre une collision entre chaque véhicule cible et le véhicule actuel en fonction de la vitesse longitudinale du véhicule actuel, de l'accélération longitudinale du véhicule actuel, de la vitesse longitudinale de chaque véhicule cible, de l'accélération longitudinale de chaque véhicule cible et d'une distance longitudinale relative entre chaque véhicule cible et le véhicule actuel ;

la détermination (S203) de la période minimale de détection de sécurité contre une collision à partir des périodes de détection de sécurité contre une collision de tous les véhicules cibles dans la voie cible et du véhicule actuel comme période de détection de sécurité contre une collision lors d'un déplacement ;

la détermination (S204) de la période minimale de détection de sécurité contre une collision à partir des périodes de détection de sécurité contre une collision de tous les véhicules cibles dans la voie de départ et du véhicule actuel comme période de détection de sécurité contre une collision lors d'un rabattement ; et

la détermination (S205) des lignes d'action virtuelles de changement de voie en fonction de la position du véhicule actuel et de la position de la ligne de voie partagée entre la voie cible et la voie de départ.

3. Procédé selon la revendication 2, dans lequel les lignes d'action virtuelles de changement de voie comprennent une ligne d'action d'autorisation du rabattement et une ligne d'action d'interdiction du rabattement, et la détermination de la stratégie d'évitement de collision en fonction de la relation de position entre le véhicule actuel et les lignes d'action virtuelles de changement de voie, la période de détection de sécurité contre une collision lors d'un déplacement et la période de détection de sécurité contre une collision lors d'un rabattement comprend :

le fait de déterminer (S207) si la période de détection de sécurité contre une collision lors d'un déplacement est inférieure à un premier seuil prédéfini en réponse au fait qu'une roue avant du véhicule actuel ne franchit pas la ligne d'action autorisant le rabattement, la détermination (S208) de la stratégie d'évitement de collision comme stratégie de rabattement en réponse à la détermination que la période de détection de sécurité contre une collision lors d'un déplacement est inférieure au premier seuil prédéfini, et la détermination (S209) de la stratégie d'évitement de collision comme stratégie de déplacement, en réponse à la détermination que la période de détection de sécurité contre une collision lors d'un déplacement est supérieure ou égale au premier seuil prédéfini ;

la détermination (S210), en réponse au fait que la roue avant du véhicule actuel est située entre la ligne d'action autorisant le rabattement et la ligne d'action interdisant le rabattement, la stratégie d'évitement de collision en fonction d'une relation d'amplitude entre la période de détection de sécurité contre une collision lors d'un déplacement, la période de détection de sécurité contre une collision lors d'un rabattement, le premier seuil prédéfini et un deuxième seuil prédéfini ; et

la détermination (S211) de la stratégie d'évitement de collision comme stratégie de déplacement en réponse au franchissement par une roue arrière du véhicule actuel de la ligne d'action interdisant le rabattement.

4. Procédé selon la revendication 3, dans lequel la détermination de la stratégie d'évitement de collision en fonction de la relation d'amplitude entre la période de détection de sécurité contre une collision lors d'un déplacement, la période de détection de sécurité contre une collision lors d'un rabattement, le premier seuil prédéfini et un deuxième seuil prédéfini comprend :

la détermination de la stratégie d'évitement de collision comme stratégie de déplacement en réponse au fait que la période de détection de sécurité contre une collision lors d'un déplacement est supérieure au premier seuil prédéfini ;

le fait de déterminer si la période de détection de sécurité contre une collision lors d'un rabattement est inférieure au deuxième seuil prédéfini en réponse à la période de détection de sécurité contre une collision lors d'un déplacement, qui est inférieure ou égale au premier seuil prédéfini, et la commande au véhicule actuel de se déplacer sur une ligne de voie et de faire sonner une alarme en réponse à la détermination que la période de détection de sécurité contre une collision lors d'un rabattement est inférieure au deuxième seuil prédéfini ; et

la détermination que la stratégie d'évitement de collision en fonction de la période de détection de sécurité contre une collision lors d'un déplacement et de la période de détection de sécurité contre une collision lors d'un rabattement en réponse à la détermination que la période de détection de sécurité contre une collision lors d'un rabattement est supérieure ou égale au deuxième seuil prédéfini,

dans lequel la détermination de la stratégie d'évitement de collision en fonction de la période de détection de sécurité contre une collision lors d'un déplacement et de la période de détection de sécurité contre une collision lors d'un rabattement comprend : la détermination de la stratégie d'évitement de collision comme stratégie de déplacement en réponse au fait que la période de détection de sécurité contre une collision lors d'un déplacement est supérieure à la période de détection de sécurité contre une collision lors d'un rabattement ; et la détermination de la stratégie d'évitement de collision comme stratégie de déplacement en réponse au fait que la période de détection de sécurité contre une collision lors d'un déplacement est inférieure à la période de détection de sécurité contre une collision lors d'un rabattement.

5. Procédé selon la revendication 4, dans lequel le fait de commander au véhicule actuel de se déplacer sur une ligne de voie comprend :

le fait de commander, en fonction d'une distance latérale entre une ligne centrale du véhicule actuel et une ligne de voie la plus proche, au véhicule actuel de se déplacer le long d'une trajectoire, avec la distance latérale inférieure à un écart prédéfini.

6. Procédé selon la revendication 1, dans lequel avant d'exécuter l'opération de changement de voie, le procédé comprend en outre :

le fait de déterminer (S301) si le véhicule actuel satisfait à une condition de changement de voie automatique ;
le fait de commander (S302) au véhicule actuel de changer automatiquement de voie en fonction d'une trajectoire de changement de voie en fonction d'une trajectoire de changement de voie en réponse à la détermination que le véhicule actuel satisfait à la condition de changement de voie automatique ; et
le fait de commander (S303) au véhicule actuel de ralentir et de mettre à jour la trajectoire de changement de voie en réponse à la détermination que le véhicule actuel ne satisfait pas à la condition de changement de voie automatique pour déterminer en outre si le véhicule actuel satisfait à la condition de changement de voie automatique,
dans lequel la condition de changement de voie automatique comprend une période de risque de collision lors d'un mouvement latéral, supérieure à un troisième seuil prédéfini, et une période de détection de sécurité contre une collision lors d'un déplacement du véhicule actuel, supérieure au premier seuil prédéfini.

7. Procédé selon la revendication 6, dans lequel la détermination de la trajectoire de changement de voie comprend :

l'acquisition d'une vitesse, d'une vitesse de lacet, d'une distance latérale entre un centre d'une tête de véhicule et la ligne de voie partagée, et un angle du véhicule actuel par rapport à une ligne centrale de la voie cible à un moment actuel du véhicule actuel ; et
le remplacement de la vitesse, de la vitesse de lacet, de la distance latérale entre le centre de la tête du véhicule et la ligne de voie partagée, et l'angle du véhicule actuel par rapport à la ligne centrale de la voie cible au moment actuel du véhicule actuel par une équation de ligne de voie pour déterminer la trajectoire de changement de voie.

8. Appareil de commande d'évitement de collision lors d'un changement de voie automatique, comprenant :

un module d'acquisition d'informations (41) configuré pour acquérir des paramètres de conduite d'un véhicule actuel, des paramètres de conduite du ou des véhicules cibles et des informations routières en réponse à l'exécution par le véhicule actuel d'une opération de changement de voie ;
un module de détermination d'informations (42) configuré pour déterminer une période de détection de sécurité contre une collision lors d'un déplacement, une période de détection de sécurité contre une collision lors d'un rabattement et des lignes d'action virtuelles de changement de voie en fonction des paramètres de conduite du véhicule actuel, des paramètres de conduite du ou des véhicules cibles et des informations routières ; et
un module de détermination de stratégie d'évitement de collision (43) configuré pour déterminer, en réponse à la détection d'une anomalie de changement de voie, une stratégie d'évitement de collision en fonction d'une relation de position entre le véhicule actuel et les lignes d'action virtuelles de changement de voie, la période de détection de sécurité contre une collision lors d'un déplacement et la période de détection de sécurité contre une collision lors d'un rabattement pour commander au véhicule actuel d'exécuter la stratégie d'évitement de collision ;
dans lequel le ou les véhicules cibles comprennent au moins un véhicule devant et derrière le véhicule actuel dans une voie de départ et au moins un véhicule devant et derrière le véhicule actuel dans une voie cible.

**9.** Véhicule, comprenant :

l'appareil selon la revendication 8 ;
au moins un dispositif de commande (51) ; et
un appareil de stockage (52) configuré pour stocker au moins un programme,
dans lequel le ou les dispositifs de commande mettent en œuvre le procédé de commande d'évitement de collision de changement de voie automatique selon l'une quelconque des revendications 1 à 7 en réponse à l'exécution du ou des programmes.

**10.** Support de stockage comprenant au moins une instruction exécutable par ordinateur, dans lequel la ou les instructions exécutables par ordinateur sont configurées pour exécuter le procédé de commande d'évitement de collision de changement de voie automatique selon l'une quelconque des revendications 1 à 7 en réponse à son exécution par un processeur informatique.

Driving parameters of a current vehicle, driving parameters of at least one target vehicle, and road information are acquired in response to the current vehicle executing a lane change operation

S101

A travel collision safety detection time period, a return collision safety detection time period, and lane change virtual action lines are determined according to the driving parameters of the current vehicle, the driving parameters of the at least one target vehicle, and the road information

S102

In response to the lane change abnormality being detected, a collision avoidance strategy is determined according to a positional relation between the current vehicle and the lane change virtual action lines, the travel collision safety detection time period, and the return collision safety detection time period, and the current vehicle is controlled to execute the collision avoidance strategy

S103

**Fig. 1**

Driving parameters of a current vehicle, driving parameters of at least one target vehicle, and road information are acquired in response to the current vehicle executing a lane change operation — S201

A collision safety detection time period between each target vehicle and the current vehicle is determined according to a longitudinal velocity of the current vehicle, a longitudinal acceleration of the current vehicle, a longitudinal velocity of each target vehicle, a longitudinal acceleration of each target vehicle, and a longitudinal relative distance between each target vehicle and the current vehicle — S202

The minimum collision safety detection time period is determined from collision safety detection time periods of all target vehicles in a target lane and the current vehicle and the minimum collision safety detection time period is determined as the travel collision safety detection time period — S203

The minimum collision safety detection time period is determined from collision safety detection time periods of all target vehicles in an original lane and the current vehicle is determined as return collision safety detection time period — S204

Lane change virtual action lines are determined according to a position of the current vehicle and a position of a lane line shared by the target lane and the original lane — S205

A positional relation between the current vehicle and each lane change virtual action line is determined in response to a lane change abnormality being detected — S206

Whether the travel collision safety detection time period is less than a first preset threshold is determined in response to a front wheel of the current vehicle not passing the return allowing action line — S207

In response to the front wheel of the current vehicle being located between the return allowing action line and the return prohibiting action line, the collision avoidance strategy is determined according to a magnitude relation among the travel collision safety detection time period, the return collision safety detection time period, the first preset threshold and a second preset threshold — S210

The collision avoidance strategy is determined as the travel strategy in response to the rear wheel of the current vehicle passing the return prohibiting action line — S211

S208

The collision avoidance strategy is determined as a return strategy

The collision avoidance strategy is determined as a travel strategy — S209

The current vehicle is controlled to execute the collision avoidance strategy — S212

Fig. 2

Fig. 3

Fig. 4

41

42

43

| Information acquisition module | Information determination module | Collision avoidance strategy determination module |

**Fig. 5**

52

Storage apparatus

53

Input device

54

Output device

51

Controller

**Fig. 6**

**REFERENCES CITED IN THE DESCRIPTION**

**Patent documents cited in the description**

- CN 202010591875
- US 2019016339 A1
- EP 3239960 A1
- CN 110614994 A